# EUROPÄISCHE PATENTSCHRIFT

(11) **EP 2 011 257 B1**
(45) Veröffentlichungstag und Bekanntmachung des Hinweises auf die Patenterteilung: **19.10.2011**
(21) Anmeldenummer: 07728319.0
(22) Anmeldetag: 19.04.2007
(51) Int. Cl.: H04B 10/08, H04B 10/207

(54) **SCHUTZVORRICHTUNG ZUR BEHEBUNG VON SIGNALSTÖRUNGEN IN EINEM PASSIVEN OPTISCHEN NETZWERK**
PROTECTION DEVICE FOR REMOVAL OF SIGNAL INTERFERENCE IN A PASSIVE OPTICAL NETWORK
DISPOSITIF DE PROTECTION POUR SUPPRIMER LES PERTURBATIONS DE SIGNAUX DANS UN RESEAU OPTIQUE PASSIF

(30) Priorität: 20.04.2006 DE 102006018431; 20.04.2006 EP 06008223; 29.06.2006 DE 102006029967
(43) Veröffentlichungstag der Anmeldung: 07.01.2009
(73) Patentinhaber: Nokia Siemens Networks GmbH & Co. KG, 81541 München (DE)
(72) Erfinder: ROHDE, Harald, 81673 München (DE); SCHUPKE, Dominic, 80339 München (DE)
(86) Internationale Anmeldenummer: PCT/EP2007/053860
(87) Internationale Veröffentlichungsnummer: WO 2007/122183

(56) Entgegenhaltungen:
- EP-A2- 0 786 878
- GB-A- 2 323 490

## Beschreibung

Die Erfindung betrifft eine Schutzvorrichtung zur Behebung von Signalstörungen in einem passiven optischen Netzwerk sowie ein entsprechendes passives optisches Netzwerk und ein Verfahren zur Behebung von Signalstörung in einem passiven optischen Netzwerk.

Die Erfindung betrifft das Gebiet von passiven optischen Netzwerken. Passive optische Netzwerke sind Netzwerke aus Glasfaserleitungen, in denen optische Lichtsignale ohne Zwischenschaltung aktiver Verstärkungskomponenten übertragen und verteilt werden. Solche passiven optischen Netzwerke werden beispielsweise als Zugangsnetze zur Verteilung von Breitbanddaten aus einem öffentlichen Glasfasernetz an eine Mehrzahl von Benutzereinheiten (auch als ONU bezeichnet, ONU = Optical Network Unit) verwendet. In derartigen passiven optischen Netzwerken werden die Daten zwischen einem so genannten OLT (OLT = Optical Line Terminal), der den Zugangspunkt zum passiven optischen Netzwerk darstellt, und den einzelnen ONUs ausgetauscht. Hierzu umfasst das optische Netzwerk einen Verzweigungspunkt, der eine vom OLT stammende Gesamtleitung in eine Mehrzahl von Verzweigungsleitungen verzweigt, wobei jede Verzweigungsleitung an einer ONU endet. Es besteht hierbei das Problem, dass in einem solchen optischen Netzwerk bei einer Datenübertragung von den ONUs zu dem OLT eine Störung in einer einzelnen ONU einen Zusammenbruch des gesamten Zugangsnetzes verursachen kann, da ein von einer ONU ausgehendes gestörtes Signal auf die Gesamtleitung gelangt und dort ein gestörtes Gesamtsignal verursacht, das nicht mehr richtig verarbeitet werden kann. Beim Auftreten solcher Signalstörungen muss bei herkömmlichen optischen Netzwerken der Fehler durch einen Servicetechniker behoben werden, der die einzelnen Verzweigungsleitungen in dem Verzweigungspunkt des optischen Netzes untersucht und einzeln auftrennt, bis der verursachende Fehler gefunden wurde. Dieses Verfahren ist sehr zeitaufwändig und führt zu einer langen Ausfallzeit des optischen Netzwerks.

Eine andere Möglichkeit offenbart beispielsweise die Schrift GB-A-2323490. Hierin wird eine Schutzvorrichtung zur Behebung von Signalstörungen in einem passiven optischen Netzwerk vorgestellt, bei der die zur Vermittlungastelle gesendeten Signale überwacht werden. Nachteilig hieran ist jedoch, dass zur Deaktivierung von schadhaften Einheiten die Intensität der Signale ermittelt und mit ermittelten Referenzwerten verglichen werden muss.

Aufgabe der Erfindung ist es deshalb, eine einfache Schutzvorrichtung für ein passives optisches Netzwerk zu schaffen, welche automatisiert und in kurzer Zeit Signalstörungen auf Verzweigungsleitungen in dem optischen Netzwerk behebt.

Diese Aufgabe wird durch die unabhängigen Patentansprüche gelöst. Weiterbildungen der Erfindung sind in den abhängigen Ansprüchen definiert.

Die erfindungsgemäße Schutzvorrichtung umfasst eine Mehrzahl von ersten Abgriffen und/oder einen zweiten Abgriff. Hierbei ist in zumindest einem Teil der verzweigungsleitungen jeweils ein erster Abgriff vorgesehen, der dazu dient, ein in der jeweiligen Verzweigungsleitung zur Gesamtleitung fließendes optisches Signal abzugreifen. Ferner ist der zweite Abgriff in der Gesamtleitung angeordnet und dient dazu, ein in der Gesamtleitung in Richtung weg von dem Verzweigungspunkt fließendes optisches Signal abzugreifen.

Die Schutzvorrichtung umfasst ferner eine Mehrzahl von Schaltern, wobei in zumindest einem Teil der Verzweigungsleitungen und insbesondere in allen Verzweigungsleitungen jeweils ein Schalter vorgesehen ist, um die jeweilige Verzweigungsleitung abzuschalten.

Die erfindungsgemäße Vorrichtung umfasst ferner eine Steuereinrichtung, welche derart ausgestaltet ist, dass beim Auftreten einer Signalstörung im Betrieb des passiven optischen Netzwerks eine nachfolgend definierte erste bzw. zweite Detektion durchgeführt wird. Die erfindungsgemäße Vorrichtung kann entweder eine der beiden Detektionen oder beide Detektionen durchführen. Bei der ersten Detektion wird detektiert, ob das durch den ersten Abgriff abgegriffene optische Signal bei zeitweiser Abschaltung einer oder mehrerer Verzweigungsleitungen eine digitale Signalpegelfolge ist, wobei hier und im Folgenden unter einer digitalen Signalpegelfolge eine Folge von Signalpegeln zu verstehen ist, deren Pegelwerte ausschließlich einen vorbestimmten Niedrig-Pegel und einen vorbestimmten Hoch-Pegel umfassen. Sollte eine solche digitale Signalpegelfolge durch die erste Detektion erfasst werden, schalten die entsprechenden Schalter in der einen oder den mehreren zeitweise abgeschalteten Verzweigungsleitungen diese Verzweigungsleitungen permanent ab. Hierbei macht man sich die Erkenntnis zunutze, dass die abgeschalteten Signalleitungen ursächlich für ein Störsignal waren, da bei ihrer Abschaltung ein ordnungsgemäßes digitales Signal empfangen wurde.

Gemäß einer zweiten Detektion wird durch die erfindungsgemäße Steuereinrichtung detektiert, ob das durch den zweiten Abgriff in einer jeweiligen Verzweigungsleitung abgegriffene optische Signal ebenfalls eine digitale Signalpegelfolge ist. Sollte dies nicht der Fall sein, schaltet der Schalter in der jeweiligen Verzweigungsleitung diese Verzweigungsleitung ab. Auf diese Weise kann direkt die Verzweigungsleitung bestimmt werden, auf der eine Störung aufgrund der Tatsache vorliegt, dass kein digitales Signal auf dieser Leitung detektiert werden kann.

Mit der erfindungsgemäßen Schutzvorrichtung können auf einfache Weise Störungen detektiert werden, die in den Verzweigungsleitungen von den Teilnehmern am Ende der Verzweigungsleitungen verursacht werden. Insbesondere kann der Fall erfasst werden, dass von einem Störer Dauerlicht in die Verzweigungsleitung gesendet wird, da in diesem Fall der Signalpegel niemals auf den Niedrig-Pegel bzw. Null-Pegel zurückgeht und folglich ein Fehler detektiert wird. Ebenso werden auch solche Störer erfasst, welche in den Zeitschlitzen senden, welche regulären Teilnehmern zugeordnet sind, da in diesem Fall Signale erzeugt werden, welche mehr als zwei Pegel aufweisen, was daran liegt, dass das Störsignal sich mit dem vorbestimmten Hoch-Pegel bzw. Eins-Pegel überlagert.

In einer bevorzugten Ausführungsform der erfindungsgemäßen Vorrichtung ist die Steuereinrichtung derart ausgestaltet, dass bei der Durchführung der ersten Detektion einzelne Verzweigungsleitungen und/oder Kombinationen aus mehreren Verzweigungsleitungen aufeinander folgend für eine vorbestimmte Zeitperiode abgeschaltet werden. Die Zeitperiode beträgt hierbei vorzugsweise 10 ms oder weniger. Durch eine derartig kurze Abschaltung der einzelnen Verzweigungsleitungen kann sehr schnell diejenige Verzweigungsleitung bzw. diejenigen Verzweigungsleitungen ermittelt werden, welche für die Störung ursächlich sind. Diese Leitungen können dann bereits nach einer kurzen Unterbrechung ganz abgeschaltet werden, so dass je nach Art des Datenverkehrs der Verbindungsausfall in nicht gestörten Verzweigungsleitungen nicht einmal detektiert wird.

In einer weiteren bevorzugten Ausführungsform der erfindungsgemäßen Vorrichtung umfasst die Steuereinrichtung in wenigstens einem Teil der Verzweigungsleitungen jeweils eine an dem zweiten Abgriff angeordnete Wandlereinrichtung, welche Lichtenergie des abgegriffenen optischen Signals in elektrische Spannung zur Steuerung des entsprechenden Schalters in der Verzweigungsleitung umfasst. Die Wandlereinrichtung führt hierbei die zweite Detektion derart durch, dass im Falle, dass das abgegriffene optische Signal keine digitale Signalpegelfolge ist, die durch die Wandlereinrichtung erzeugte Spannung einen Wert annimmt, der das Abschalten des Schalters in der jeweiligen Verzweigungsleitung bewirkt. Diese Wandlereinrichtung kann auf besonders einfache Weise zum Abschalten des Schalters in der jeweiligen Verzweigungsleitung dann Bewirken, wenn das abgegriffene optische Signal ein Dauerlichtsignal ist. Die Wandlereinrichtung kann insbesondere auf einfache Weise als passive Komponente ausgeschaltet sein, welche eine Photodiode und einen Kondensator umfasst, welche derart zusammenwirken, dass die Photodiode bei Empfang von Lichtenergie aus dem abgegriffenen optischen Signal den Kondensator lädt, wobei bei ausreichender Ladung des Kondensators der Schalter durch die Ladung des Kondensators abgeschaltet wird.

Die in den Verzweigungsleitungen verwendeten Schalter können beliebige Schalter zum Abschalten einer optischen Leitung sein, beispielsweise können die Schalter piezoelektrische Schalter und/oder Mach-Zehnder-Modulatoren und/oder Elektro-Absorptionsmodulatoren und/oder durch optische Signale schaltbare Schalter umfassen.

In einer Ausführungsform kann der durch optische Signale schaltbare Schalter einen Filter zum Durchlassen einer Abschaltwellenlänge in der Verzweigungsleitung und einen Absorptionsfarbstoff in der Verzweigungsleitung umfassen, wobei beim Auftreffen eines durch den Filter durchgelassenen optischen Signals mit der Abschaltwellenlänge bewirkt, dass der Absorptionsfarbstoff opak wird.

In einer weiteren Ausgestaltung der erfindungsgemäßen Vorrichtung umfasst wenigstens einer der durch optische Signale schaltbaren Schalter einen Abzweig in der Verzweigungsleitung, wobei in dem Abzweig ein Filter zum Durchlassen einer Abschaltwellenlänge, eine Photodiode und ein Mach-Zehnder-Modulator angeordnet sind, wobei ein durch das Filter durchgelassenes optisches Signal mit der Abschaltwellenlänge auf die Photodiode trifft, welche eine elektrische Spannung erzeugt, die den Mach-Zehnder-Modulator derart ansteuert, dass der Mach-Zehnder-Modulator ein Abschalten der Verzweigungsleitung bewirkt.

Vorzugsweise sind der oder die durch optische Signale schaltbaren Schalter derart in der Verzweigungsleitung bzw. in einem Abzweig angeordnet, dass ein aus der Gesamtleitung fließendes optisches Signal den Schaltvorgang bewirkt. Dies wird insbesondere dadurch ermöglicht, dass das Filter in Bezug auf den Verzweigungspunkt in der Verzweigungsleitung immer vor den weiteren Komponenten, das heißt dem Absorptionsfarbstoff bzw. der Photodiode und dem Mach-Zehnder-Modulator, angeordnet werden. Das Filter in einem durch optische Signale schaltbaren Schalter ist hierbei vorzugsweise ein CWDM-Filter (CWDM = Coarse Wavelength Division Multiplex) und/oder ein dielektrischer Filter. Das CWDM-Verfahren sowie entsprechende Filter hierzu sind hinlänglich aus dem Stand der Technik bekannt und werden deshalb in dieser Anmeldung nicht näher beschrieben.

In einer weiteren Ausführungsform, bei der durch optische Signale schaltbare Schalter verwendet werden, ist die Steuereinrichtung derart ausgestaltet, dass sie die optischen Signale mit den entsprechenden Abschaltwellenlängen erzeugt und in die Gesamtleitung aussendet. Auf diese Weise können verschiedene Abschaltwellenlängen für die einzelnen Verzweigungsleitungen erzeugt werden, und jede Verzweigungsleitung kann separat durch ein Signal auf der Gesamtleitung angesprochen werden.

Neben der oben beschriebenen Schutzvorrichtung betrifft die Erfindung ferner ein passives optisches Netzwerk, umfassend eine Gesamtleitung, welche in mehrere optische Verzweigungsleitungen an einem Verzweigungspunkt verzweigt wird, wobei das Netzwerk eine erfindungsgemäße Schutzvorrichtung umfasst. In einem solchen Netzwerk erstreckt sich die Gesamtleitung des Netzwerks vorzugsweise von einem OLT bis zu dem Verzweigungspunkt.

In einer weiteren Ausgestaltung des Netzwerks, welche insbesondere in Kombination mit einer Steuereinrichtung mit durch optische Signale schaltbaren Schaltern realisiert wird, ist die Steuereinrichtung an dem OLT angeordnet, wobei der Schaltvorgang durch ein entsprechendes optisches Signal mit entsprechenden Abschaltwellenlängen in der Gesamtleitung bewirkt werden kann.

In einer weiteren Ausgestaltung des erfindungsgemäßen Netzwerks wird der Verzweigungspunkt durch einen Kabelverzweiger, insbesondere in der Form eines passiven optischen Strahlteilers, gebildet. Ferner enden die einzelnen Verzeigungsleitungen vorzugsweise jeweils an einer ONU (ONU = Optical Network Unit).

Neben der oben beschriebenen Vorrichtung und dem oben beschriebenen Netzwerk umfasst die Erfindung ferner ein Verfahren zur Behebung von Signalstörungen in einem passiven optischen Netzwerk, in dem eine optische Gesamtleitung in mehrere optische Verzweigungsleitungen an einem Verzweigungspunkt verzweigt wird, wobei beim Auftreten einer Signalstörung im Betrieb des passiven optischen Netzwerks folgende Schritte ausgeführt werden:
- Durchführen einer ersten Detektion, mit der detektiert wird, ob ein in der Gesamtleitung abgegriffenes und von dem Verzweigungspunkt weg fließendes optisches Signal bei Abschaltung einer oder mehrerer Verzweigungsleitungen eine digitale Signalpegelfolge aus einer Vielzahl von Signalpegeln ist, deren Pegelwerte ausschließlich einen vorbestimmten Niedrig-Pegel und einen vorbestimmten Hoch-Pegel umfassen, wobei die eine oder die mehreren zeitweise abgeschalteten Verzweigungleitungen bei der Detektion einer digitalen Signalpegelfolge permanent abgeschaltet werden, und/oder
- Durchführen einer zweiten Detektion, mit der detektiert wird, ob ein in einer jeweiligen Verzweigungsleitung abgegriffenes und zum Verzweigungspunkt fließendes optisches Signal eine digitale Signalpegelfolge aus einer Vielzahl von Signalpegeln ist, deren Pegelwerte ausschließlich einen vorbestimmten Niedrig-Pegel und einen vorbestimmten Hoch-Pegel umfassen, wobei im Falle, dass keine digitale Signalpegelfolge vorliegt, die jeweilige Verzweigungsleitung abgeschaltet wird.

Dieses erfindungsgemäße Verfahren kann insbesondere durch eine oben beschriebene Schutzvorrichtung realisiert werden.

Ausführungsbeispiele der Erfindung werden nachfolgend anhand der beigefügten Figuren detailliert beschrieben.

Es zeigen:
- Fig. 1: eine schematische Darstellung eines herkömmlichen passiven optischen Netzwerks zur Verdeutlichung der erfindungsgemäßen Problemstellung;
- Fig. 2: eine schematische Darstellung eines passiven optischen Netzwerk, welches eine Schutzvorrichtung gemäß einer ersten Ausführungsform der Erfindung beinhaltet;
- Fig. 3: eine schematische Darstellung eines passiven optischen Netzwerks, welches eine Schutzvorrichtung gemäß einer zweiten Ausführungsform der Erfindung beinhaltet;
- Fig. 4: eine Detailansicht der in der Ausführungsform der Fig. 3 eingesetzten Steuerungen zum Abschalten der Verzweigungsleitungen;
- Fig. 5 und Fig. 6: zwei Ausgestaltungen von in der erfindungsgemäßen Schutzvorrichtung verwendbaren optischen Schaltern.

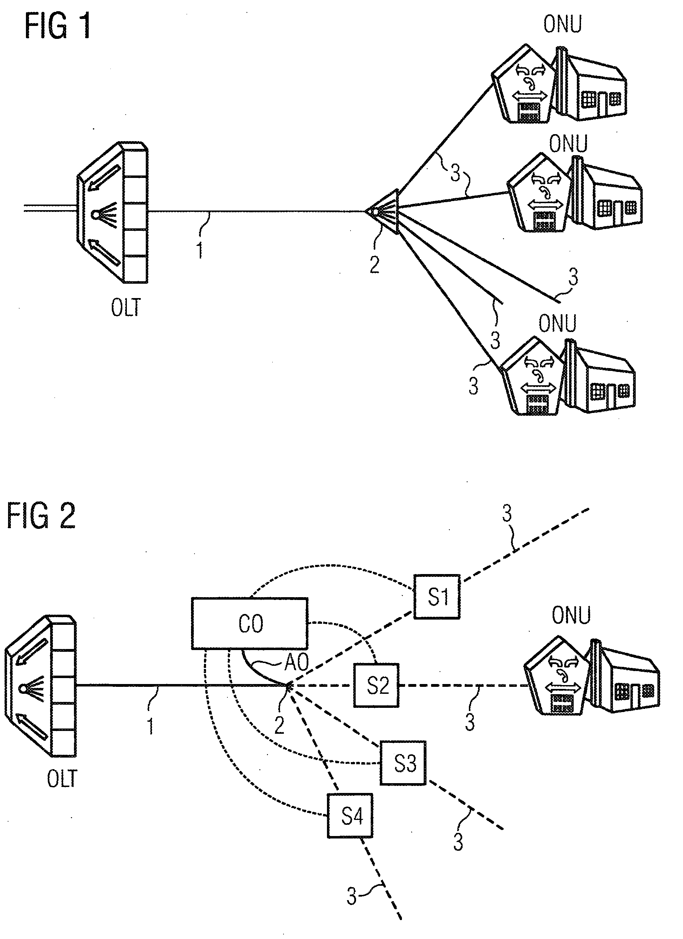

Fig. 1 zeigt in schematischer Darstellung ein herkömmliches passives optisches Netzwerk. Bei dem dargestellten Netzwerk handelt es sich um ein so genanntes Metro-Access-Netzwerk, über das Daten aus einem öffentlichen optischen Glasfasernetz an verschiedene Haushalte verteilt werden. Das optische Netz umfasst als Zugangspunkt einen so genannten OLT (OLT = Opitcal Line Terminal), der hinlänglich aus dem Stand der Technik bekannt ist und die übertragungstechnische Schnittstelle zwischen dem Metro-Access-Netz und dem dahinter liegenden öffentlichen Backbone-Glasfasernetz ist.

In der hier beschriebenen Ausführungsform des optischen Netzwerks werden über den OLT digitale Daten, insbesondere Datenpakete aus dem Internet bzw. Daten von Multimedia-Diensten, aus dem Backbone-Netz zu den Haushalten bzw. in umgekehrter Richtung von den Haushalten in das Backbone-Netz übertragen. Der OLT ist mit einer Gesamtleitung 1 in der Form eines Glasfaserkabels verbunden, wobei über diese Leitung mit Hilfe entsprechender Multiplexverfahren digitale Daten in der Form von optischen Signalen übertragen werden. An die Gesamtleitung 1 schließt sich ein Kabelverzweiger 2 an, der ein passiver optischer Verteiler ist und die Signale aus der Gesamtleitung 1 entsprechenden optischen Verzweigungsleitungen 3 zuweist. An jeder dieser Verzweigungsleitungen hängt ein entsprechender Teilnehmer, der eine ONU (ONU = Optical Network Unit) in dem passiven optischen Netzwerk darstellt. In Fig. 1 sind beispielhaft fünf Verzweigungsleitungen 3 gezeigt, wobei zum Zwecke der klareren Darstellung nur drei ONUs wiedergegeben sind. Nichtsdestotrotz hängt an jeder Verzweigungsleitung eine entsprechende ONU.

Die Datenübertragung in dem in Fig. 1 gezeigten Netzwerk erfolgt derart, dass ein optisches Gesamtsignal in der Leitung 1 von dem OLT zu den einzelnen ONUs gesendet wird, wobei jede einzelne ONU nur auf die Daten reagiert, die an sie adressiert sind. Die Übertragung der Daten von den ONUs zu der OLT erfolgt demgegenüber derart, dass einer jeweiligen ONU ein Zeitschlitz zugeordnet ist, während dem die ONU sendet und alle anderen ONUs inaktiv sein müssen.

In dem passiven optischen Netzwerk der Fig. 1 besteht das Problem, dass aufgrund der gemeinsamen Zugangsfaser 1 für alle ONUs und der Art des Multiplexens für die einzelnen ONUs eine Störung in einer einzelnen ONU zum Ausfall des gesamten optischen Netzwerks führen kann. Wird beispielsweise in einer ONU entweder versehentlich oder aufgrund eines technischen Fehlers Laserlicht auf der Übertragungswellenlänge eingestrahlt, wird hierdurch das auf der Gesamtleitung 1 hin zum OLT übertragene optische Signal unbrauchbar, da die mit dem Signal übertragene digitale Information durch das Laserlicht zerstört wird. Das Metro-Access-Netzwerk wird somit für alle ONUs unbrauchbar. Bisherige passive optische Netzwerke verarbeiten optische Signale für 32 ONUs, jedoch werden in Zukunft auch passive optische Netzwerke verwendet, bei denen die Anzahl an ONUs 1024 beträgt. Somit steigt die Gefahr eines unabsichtlichen oder absichtlichen Netzausfalls in zukünftigen Netzwerken stark an.

Gemäß dem Stand der Technik kann die soeben geschilderte Signalstörung in dem Netzwerk der Fig. 1 nur dadurch behoben werden, dass ein Servicetechniker zu dem entsprechenden Verzweigungspunkt 2 fährt und nacheinander alle Faserleitungen der einzelnen ONUs auftrennt, bis die den Fehler verursachende Faser gefunden wurde. Dieses Verfahren ist sehr zeitaufwändig und schwierig, da der Zugang zu dem Faseraufteiler 2 nicht immer einfach gegeben ist.

Fig. 2 zeigt eine erste Ausführungsform eines passiven optischen Netzwerks, welches eine Schutzvorrichtung beinhaltet, mit der die im vorangegangenen beschriebenen Probleme gelöst werden. Das optische Netzwerk der Fig. 2 weist im Wesentlichen den gleichen Aufbau wie das Netzwerk der Fig. 1 auf. Zur Verdeutlichung wurden Verzweigungsleitungen 3 als gestrichelte Linien angedeutet und der optische Verteiler 2 ist lediglich als Knoten wiedergegeben. Die in Fig. 2 verwendete Schutzvorrichtung umfasst eine Vielzahl von optischen Schaltern, wobei unter einem optischen Schalter ein Schalter zu verstehen ist, mit dem optische Signale in einer optischen Leitung abgeschaltet werden können. Jede Verzweigungsleitung 3 weist hierbei einen einzelnen optischen Schalter S1, S2, S3 und S4 auf. Diese optischen Schalter werden über eine gemeinsame Steuereinrichtung C0 gesteuert, wobei das Steuern der Schalter über diese Steuereinrichtung durch entsprechende punktierte Linien angedeutet ist.

In der Ausführungsform der Fig. 2 erfolgt die Detektion von Signalstörungen über einen einzelnen Abgriff A0 in der Gesamtleitung 1. Über diesen Abgriff wird das von dem Verteiler zur OLT fließende, auf einer vorbestimmten Trägerfrequenz übertragene Gesamtsignal in der Leitung 1 erfasst. Aufgrund des Aussendens von digitalen Daten in verschiedenen Zeitschlitzen durch die ONUs ist das Gesamtsignal im ordnungsgemäßen Betrieb ein digitales Signal, dem ein vorbestimmter Niedrig-Pegel zur Übertragung des digitalen Null-Zustands und ein vorbestimmter Hoch-Pegel zur Übertragung des digitalen Eins-Zustands zugeordnet ist. Die Steuereinrichtung C0 detektiert zunächst, ob das Signal in der Gesamtleitung einem solchen digitalen Signal entspricht. Sollte festgestellt werden, dass ein solches Signal nicht vorliegt, wird durch die Steuereinrichtung C0 die entsprechende Fehlerquelle gesucht, wie im Folgenden näher erläutert wird.

Eine Signalstörung kann in dem Netzwerk der Fig. 2 beispielsweise dann auftreten, wenn ein Störer in einer ONU ein Dauerlichtsignal aussendet. In diesem Fall detektiert die Steuerung C0, dass das Gesamtsignal nie auf dem Niedrig-Pegel abfällt und somit keinem digitalen Signal entspricht. Darüber hinaus werden solche Störungen erfasst, bei dem ein Störer in einer ONU moduliertes Licht nur zu den Zeitschlitzen sendet, zu denen auch ein regulär funktionierendes ONU senden darf. In diesem Fall wird von der Steuereinheit C0 festgestellt, dass das Signal neben dem Niedrig-Pegel und dem vorbestimmten Hoch-Pegel einen weiteren Pegel aufweist, der durch die Überlagerung des Störsignals mit dem vorbestimmten Hoch-Pegel entsteht. Auch in diesem Fall stellt die Steuereinrichtung C0 fest, dass kein digitales Signal vorliegt.

Zur Behebung der Signalstörung wird in der Ausführungsform der Fig. 2 nacheinander jede Verzweigungsleitung 3 über die entsprechenden Schalter S1, S2, S3 bzw. S4 abgeschaltet. Die Abschaltzeit ist hierbei sehr kurz gewählt und beträgt insbesondere weniger als 10 ms. Die Abschaltzeit ist jedoch gerade noch so groß, dass das Signal in der Gesamtleitung 1 bei abgeschalteter Verzweigungsleitung detektiert werden kann. Die Steuereinrichtung C0 überprüft beim Abschalten einer Verzweigungsleitung, ob die Signalstörung nun behoben ist, das heißt ob auf der Gesamtleitung wieder ein digitales Signal vorliegt. Ist dies der Fall, konnte die entsprechende abgeschaltete Verzweigungsleitung als Störleitung identifiziert werden, an deren Ende sich eine ONU mit einer Störung befindet. Daraufhin wird durch die Steuerung C0 die entsprechende Störleitung über den entsprechenden optischen Schalter permanent abgeschaltet. Anschließend kann Servicepersonal zu der gestörten ONU geschickt werden, um die Störung in der ONU zu beheben. Das restliche Metro-Access-Netzwerk funktioniert jedoch nach einer kurzen Unterbrechung von wenigen Sekunden wieder und je nach Art des Datenverkehrs wird der Verbindungsausfall nicht einmal detektiert.

Die erfindungsgemäße Schutzvorrichtung, welche in der Ausführungsform der Fig. 2 eine gemeinsame Steuereinrichtung C0 und optische Schalter S1 bis S4 umfasst, verbraucht im Allgemeinen nur sehr wenig Strom und kann beispielsweise durch Solar-Panels oder Batterie gespeist werden, wenn am Verzweigungspunkt 2, an dem die Steuereinrichtung üblicherweise integriert wird, keine Stromversorgung zur Verfügung steht.

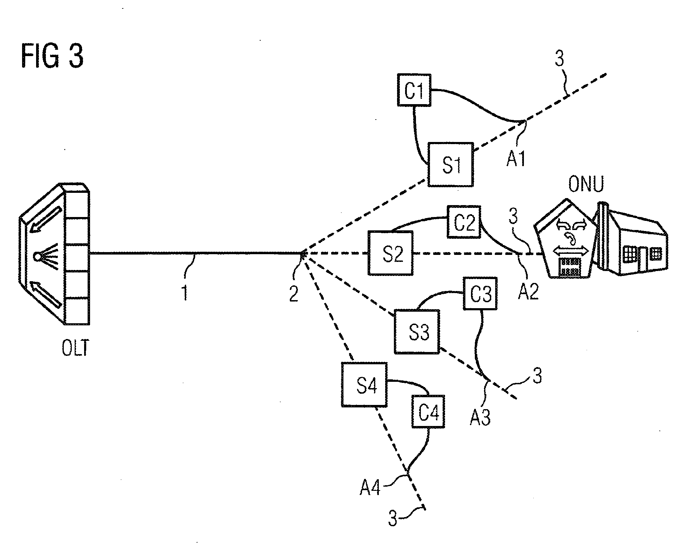

Fig. 3 zeigt ein passives optisches Netzwerk mit dem gleichen Aufbau wie in Fig. 2. Jedoch verwendet dieses optische Netzwerk eine andere Ausführungsform einer erfindungsgemäßen Schutzvorrichtung. Diese Schutzvorrichtung weist - analog zu Fig. 2 -Schalter S1, S2, S3 bzw. S4 in jeder Verzweigungsleitung 3 auf. Im Unterschied zu Fig. 2 werden die einzelnen Schalter jedoch getrennt über entsprechende Steuereinheiten C1, C2, C3 und C4 gesteuert. Die Steuereinrichtung wird somit durch diese dezentrale Steuereinheiten C1 bis C4 gebildet. Jede der Steuereinheiten greift hierbei über einen entsprechenden Abgriff A1, A2, A3 bzw. A4 das Signal in der entsprechenden Verzweigungsleitung 3 ab. Das abgegriffene Signal gelangt über entsprechende Leitungen zu den Steuereinheiten C1 bis C4, wobei die einzelnen Steuereinheiten den Schalter in Abhängigkeit von dem abgegriffenen Signal über entsprechende Leitungen zwischen der jeweiligen Steuereinheit und dem Schalter steuern. Die Steuereinheiten sind hierbei derart ausgestaltet, dass sie im Falle, wenn das abgegriffene Signal keine digitale Signalpegelfolge darstellt, das Abschalten des entsprechenden Schalters bewirken. Wie im Vorangegangenen bereits beschrieben wurde, liegt eine digitale Signalpegelfolge nur dann vor, wenn die einzelnen Signale in der Signalfolge nur zwei verschiedene Werte, nämlich einen vorbestimmten Niedrig-Pegel und einen vorbestimmten Hoch-Pegel, annehmen können.

Mit den einzelnen Steuereinheiten C1 bis C4 können in Fig. 3 Störungen erfasst werden, welche beispielsweise durch das Aussenden von Dauerlicht auf der Trägerfrequenz in eine Verzweigungsleitung verursacht werden. In diesem Fall geht das Signal in der entsprechenden Verzweigungsleitung nie auf den Niedrig-Pegel zurück.

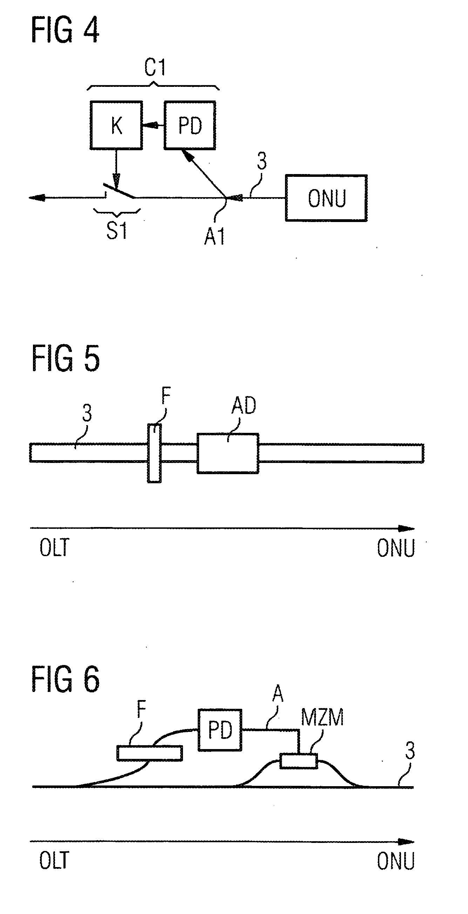

Fig. 4 zeigt eine einfache passive Realisierungsmöglichkeit für eine Steuereinheit C1, C2, C3 bzw. C4 in einer jeweiligen Verzweigungsleitung 3. In Fig. 4 ist diese Realisierungsmöglichkeit für den Steuereinheit C1 gezeigt, wobei die Steuereinheiten C2 bis C4 in gleicher Weise ausgestaltet sein können. Die in Fig. 4 dargestellte Realisation der Steuereinheit C1 dient dazu, eine Störung zu erfassen, bei der Dauerlicht durch einen Störer von der ONU in die entsprechende Verzweigungsleitung 3 gesendet wird.

Die Steuereinheit C1 umfasst hierzu eine Photodiode PD, welche das abgegriffene optische Signal von dem Abgriff A1 erhält. Die Photodiode PD erzeugt aufgrund des abgegriffenen Signals einen Strom, der einen Kondensator K auflädt, wobei ferner ein (nicht gezeigter) Entladewiderstand vorgesehen ist, über den der Kondensator K mit der Zeit wieder entladen wird. Die durch den Kondensator K erzeugte Spannung dient hierbei zur Steuerung des entsprechenden Schalters S1. Sollte die Aufladung und somit die Spannung des Kondensators K groß genug sein, führt dies zum Öffnen des Schalters S1 und somit zum Abschalten der Verzweigungsleitung. Zur Detektion von ausgesendetem Dauerlicht sind hierbei die Photodiode PD, der Kondensator K und der Schalter S1 derart aufeinander abgestimmt, dass durch das normale Senden von Licht während der Zeitschlitze, die der ONU auf der Verzweigungsleitung 3 zugeordnet sind, der Kondensator K nicht ausreichend aufgeladen wird, um eine Spannung zu erzeugen, welche das Öffnen des Schalters S1 bewirkt. Dies liegt daran; dass zwischen den Zeitschlitzen, zu denen kein Signal gesendet wird, sich der Kondensator K wieder entladen kann. Wird nunmehr hingegen Dauerlicht in die Verzweigungsleitung 3 gesendet, wird der Kondensator K über die Photodiode PD so weit aufgeladen, dass die erzeugte Spannung ausreicht, den Schalter S1 zu öffnen und die Verzweigungsleitung 3 abzuschalten. Der Schalter kann dann entweder manuell durch einen Servicetechniker oder automatisch (revertierter Schalter) in den Normalbetrieb zurückgestellt werden.

Die Ausführungsform der Fig. 4 zeigt somit eine sehr einfache Realisierungsmöglichkeit einer erfindungsgemäßen Schutzvorrichtung, welche nur aus passiven Komponenten besteht und keine eigene Energieversorgung benötigt.

Die in den vorangegangenen Ausführungsformen verwendeten optischen Schalter zum Abschalten der Verzweigungsleitungen können beliebige Schalter sein..Insbesondere können aus dem Stand der Technik bekannte Schalter, beispielsweise mechanische piezoelektrische Schalter, Mach-Zehnder-Modulatoren bzw. Elektro-Absorptionsmodulatoren eingesetzt werden. Es besteht jedoch auch die Möglichkeit, neuartige Schalter zu verwenden, deren Aufbau in Fig. 5 bzw. Fig. 6 gezeigt ist.

Die beiden Schalter in Fig. 5 und Fig. 6 haben gemeinsam, dass sie durch optische Signale in den Glasfaserleitungen geschaltet werden, wobei die optischen Signale in Richtung zu den einzelnen ONUs ausgesendet werden. Die Ausführungsformen der Fig. 5 und Fig. 6 eignen sich deshalb insbesondere bei der Realisation einer Schutzvorrichtung, deren Steuereinrichtung entfernt von dem Verzweigungspunkt 2, insbesondere in dem OLT angeordnet ist. Es ist in diesem Falle nämlich möglich, dass die Abschaltsignale als optische Signale mit der entsprechenden Abschaltwellenlänge in die Gesamtleitung 1 gesendet werden und von dort an die entsprechenden optischen Schalter gelangen.

Damit die Komponenten solcher optischen Schalter preiswert bleiben, werden vorzugsweise so genannte CWDM-Techniken zur Erzeugen von Abschaltsignalen mit entsprechenden Wellenlängen eingesetzt (CWDM = Coarse Wavelength Division Multiplex). Bei diesen Techniken werden Wellenlängen als Abschaltwellenlängen benutzt, die untereinander einen Wellenlängenabstand von mindestens 20 nm aufweisen, so dass über preiswerte optische Filter ein Herausfiltern der Abschaltsignale in den einzelnen optischen Schaltern realisiert werden kann. Die Anzahl der Abschaltsignalwellenlängen ist jedoch bei der CWDM-Technik begrenzt, so dass auch Realisierungen denkbar sind, bei denen eine ganze Gruppe von Verzweigungsleitungen mit einer Abschaltwellenlänge abgeschaltet wird. Eine solche Variante stellt einen Kompromiss zwischen den aufzuwendenden Kosten und der erreichbaren Ausfallsicherheit des optischen Netzwerks dar.

Die in Fig. 5 gezeigte Variante eines optischen Schalters umfasst in der entsprechenden Verzweigungsleitung 3 einen CWDM-Filter F sowie einen Absorptionsfarbstoff AD. Der CWDM-Filter stellt hierbei einen dielektrischen Filter dar, der nur die Telekommunikationswellenlängen zur Datenübertragung zwischen OLT und ONU sowie eine einzige ausgewählte Abschaltwellenlänge durchlässt. Um ein Abschalten der Verzweigungsleitung 3 zu bewirken, sendet die Steuereinrichtung ein Signal mit der Abschaltwellenlänge von dem OLT über den Verzweigungspunkt 2 in die Verzweigungsleitungen 3. Durch das Filter F wird das Signal mit der Abschaltwellenlänge durchgelassen und trifft auf dem Absorptionsfarbstoff AD. Dieser Absorptionsfarbstoff ist derart ausgestaltet, dass er sich beim Eintreffen von Licht mit der Abschaltwellenlänge opak verfärbt und somit den optischen Faserzugang abschaltet.

Fig. 6 zeigt eine weitere Realisierungsmöglichkeit eines durch optische Signale schaltbaren Schalters. Die Komponenten des Schalters sind hierbei in einem Abzweig A von der Verzweigungsleitung 3 angeordnet. Sie umfassen ein Filter F, eine Photodiode PD sowie einen Mach-Zehnder-Modulator MZM. Das Filter F ist wiederum ein CWDM-Filter, welches jedoch nur eine Abschaltwellenlänge durchlässt. Wird durch die Steuereinrichtung nunmehr Licht mit der Abschaltwellenlänge in die Leitung 3 gesendet, gelangt das Licht über das Filter F zur einer nachgeschalteten Photodiode PD, welche dadurch eine Spannung generiert, die wiederum den Mach-Zehnder-Modulator MZM ansteuert, der die Verzweigungsleitung 3 optisch abschaltet. Da ein Mach-Zehnder-Modulator im statischen Fall nur eine Spannung, aber keine elektrische Leistung benötigt, reicht die von der Photodiode erzeugte Spannung aus, um ein Abschalten der Verzweigungsleitung 3 zu bewirken. Wie bereits oben erwähnt, weisen die Ausführungsformen von optischen Schaltern in Fig. 5 und Fig. 6 den Vorteil auf, dass die Steuereinrichtung auch entfernt von dem Verzweigungspunkt bzw. den optischen Schaltern angeordnet werden kann, da die Steuerung der optischen Schalter über ein eingespeistes optisches Signal mit entsprechender Abschaltwellenlänge erfolgt.

## Patentansprüche

1. Schutzvorrichtung zur Behebung von Signalstörungen in einem passiven optischen Netzwerk, in dem eine optische Gesamtleitung (1) in mehrere optische Verzweigungsleitungen (3) an einem Verzweigungspunkt (2) verzweigt wird, **gekennzeichnet durch**
- einen ersten Abgriff (A0) und/oder eine Mehrzahl von zweiten Abgriffen (A1, A2, .... A4), wobei in zumindest einem Teil der Verzweigungsleitungen (3) jeweils ein zweiter Abgriff vorgesehen ist, um ein in der jeweiligen Verzweigungsleitung (3) zur Gesamtleitung (1) fließendes optisches Signal abzugreifen, und/oder wobei in der Gesamtleitung (1) der erste Abgriff (A0) vorgesehen ist, um ein in der Gesamtleitung (1) in Richtung weg von dem Verzweigungspunkt (2) fließendes optisches Signal abzugreifen;
- eine Mehrzahl von Schaltern (S1, S2, ..., S4), wobei in zumindest einem Teil der Verzweigungsleitungen (3) jeweils ein Schalter vorgesehen ist, um die jeweilige Verzweigungsleitung (3) abzuschalten;
- wobei die Schutzvorrichtung eine Steuereinrichtung (C0; C1, C2, ..., C4) umfasst, welche derart ausgestaltet ist, dass beim Auftreten einer Signalstörung im Betrieb des passiven optischen Netzwerks
- eine Detektion eines Signals am ersten Abgriff (A0) durchgeführt wird, mit der detektiert wird, ob das durch den ersten Abgriff (A0) abgegriffene optische Signal bei zeitweiser Abschaltung einer oder mehrerer Verzweigungsleitungen (3) eine digitale Signalpegelfolge aus einer Vielzahl von Signalpegeln ist, deren Pegelwerte ausschließlich einen vorbestimmten Niedrig-Pegel und einen vorbestimmten Hoch-Pegel umfassen, wobei der oder die Schalter (S1, S2 , ..., S4) in der einen oder den mehreren zeitweise abgeschalteten Verzweigungsleitungen (3) bei der Detektion einer digitalen Signalpegelfolge die eine oder die mehreren Verzweigungsleitungen (3) permanent abschalten, und/oder
- eine Detektion eines Signals am zweiten Abgriff (A1, A2, ..., A4) durchgeführt wird, mit der detektiert wird, ob das **durch** den zweiten Abgriff (A1, A2, ..., A4) in einer jeweiligen Verzweigungsleitung (3) abgegriffene optische Signal eine digitale Signalpegelfolge aus einer Vielzahl von Signalpegeln ist, deren Pegelwerte ausschließlich einen vorbestimmten Niedrig-Pegel und einen vorbestimmten Hoch-Pegel umfassen, wobei der Schalter (S1, S2, ..., S4) in der jeweiligen verzweigungsleitung (3) im Falle, dass keine digitale Signalpegelfolge vorliegt, die jeweilige Verzweigungsleitung (3) abschaltet.

2. Vorrichtung nach Anspruch 1, bei der die Steuereinrichtung (C0; C1, C2, ..., C4) derart ausgestaltet ist, dass bei der Durchführung der Detektion eines Signals am ersten Abgriff (A0) einzelne Verzweigungsleitungen und/oder Kombinationen aus mehreren Verzweigungsleitungen aufeinander folgend für eine vorbestimmte Zeitperiode abgeschaltet werden.

3. Vorrichtung nach Anspruch 2, bei der die vorbestimmte Zeitperiode 10 ms oder weniger beträgt.

4. Vorrichtung nach einem der vorhergehenden Ansprüche, bei der die Steuereinrichtung (C0; C1, C2, .-, C4) in wenigstens einem Teil der Verzweigungsleitungen (3) jeweils eine an dem zweiten Abgriff (A1, A2, ..., A4) angeordnete Wandlereinrichtung (PD, K) zum Wandeln von Lichtenergie des abgegriffenen optischen Signals in elektrische Spannung zur Steuerung des Schalters (S1, S2, ..., S4) in der jeweiligen verzweigungsleitung (3) umfasst, wobei die Wandlereinrichtung (PD, K) die Detektion eines Signals am zweiten Abgriff derart durchführt, dass im Falle, dass das abgegriffene optische Signal keine digitale Signalpegelfolge ist, die durch die Wandlereinrichtung (PD, K) erzeugte Spannung einen Wert annimmt, der das Abschalten des Schalters in der jeweiligen Verzweigungsleitung (3) bewirkt.

5. Vorrichtung nach Anspruch 4, bei der das Abschalten des Schalters (S1, S2, ..., S4) in der jeweiligen Verzweigungsleitung (3) dann bewirkt wird, wenn das abgegriffene optische Signal ein Dauerlichtsignal ist.

6. Vorrichtung nach Anspruch 4 oder 5, bei der die Wandlereinrichtung eine Photodiode (PD) und einen Kondensator (K) umfasst, welche derart zusammenwirken, dass die Photodiode (PD) bei Empfang von Lichtenergie aus dem abgegriffenen optischen Signal den Kondensator (K) lädt, wobei bei ausreichender Ladung des Kondensators (K) der Schalter (S1, S2, ..., S4) in der jeweiligen Verzweigungsleitung (3) durch die Ladung des Kondensators abgeschaltet wird.

7. Vorrichtung nach einem der vorhergehenden Ansprüche, bei der die Schalter (S1, S2, ..., S4) in den Verzweigungsleitungen (3) piezoelektrische Schalter und/oder Mach-Zehnder-Modulatoren und/oder Elektro-Absorptionsmodulatoren und/oder durch optische Signale schaltbare Schalter umfassen.

8. Vorrichtung nach Anspruch 7, bei der wenigstens einer der durch optische Signale schaltbaren Schalter (S1, S2, ..., S4) einen Filter (F) zum Durchlassen einer Abschaltwellenlänge in der Verzweigungsleitung (3) und einen Abeorptionsfarbstoff (AD) in der Verzweigungsleitung (3) umfasst, wobei das Auftreffen eines durch das Filter (F) durchgelassenen optischen Signals mit der Abschaltwellenlänge auf den Absorptionsfarbstoff (AD) bewirkt, dass der Absorptionsfarbstoff (AD) opak wird.

9. Vorrichtung nach Anspruch 7 oder 8, bei der wenigstens einer der durch optische Signale schaltbaren Schalter (S1, S2 , ..., S4) einen Abzweig (A) in der Verzweigungsleitung (3) umfasst, wobei in dem Abzweig (A) ein Filter zum Durchlassen einer Abschaltwell.enlänge (F), eine Photodiode (PD) und ein Mach-Zehnder-Modulator (MZM) angeordnet sind, wobei ein durch das Filter (F) durchgelassenes optisches Signal mit der Abschaltwellenlänge auf die Photodiode (PD) trifft, welche daraufhin eine elektrische Spannung erzeugt, die den Mach-Zehnder-Modulator (MZM) derart ansteuert, dass der Mach-Zehnder-Modulator (MZM) ein Abschalten der Verzweigungsleitung (3) bewirkt.

10. Vorrichtung nach einem der Ansprüche 7 bis 9, wobei der oder die durch optische Signale schaltbaren Schalter (S1, S2, ..., S4) durch ein aus der Gesamtleitung (1) fließendes optisches Signal schaltbar sind.

11. Vorrichtung nach einem der Ansprüche 7 bis 10, bei dem das Filter (F) in einem jeweiligen durch optische Signale schaltbaren Schalter (S1, S2, ···, S4) ein CWDM-Filter und/oder ein dielektrisches Filter ist.

12. Vorrichtung nach einem der Ansprüche 7 bis 11, wobei die Steuereinrichtung (C0; C1, ..., C4) derart ausgestaltet ist, dass sie die optischen Signale mit den entsprechenden Abschaltwellenlängen erzeugt und in die Gesamtleitung (1) aussendet.

13. Passives optisches Netzwerk, umfassend eine Gesamtleitung (1), welche in mehrere optische Verzweigungsleitungen (3) an einem Verzweigungspunkt (2) verzweigt wird, wobei das Netzwerk eine Vorrichtung nach einem der vorhergehenden Ansprüche umfasst.

14. Netzwerk nach Anspruch 13, wobei die Gesamtleitung (1) des Netzwerks sich von einem OLT bis zu dem Verzweigungspunkt (2) erstreckt

15. Netzwerk nach Anspruch 13 oder 14, bei dem die Steuereinrichtung an dem OLT angeordnet ist, wobei die Steuereinrichtung vorzugsweise eine Steuereinrichtung einer Vorrichtung nach Anspruch 12 ist.

16. Netzwerk nach einem der Ansprüche 13 bis 15, wobei der Verzweigungspunkt (2)durch einen Kabelverzweiger, insbesondere in der Form eines passiven optischen Strahlteilers, gebildet ist.

17. Netzwerk nach einem der Ansprüche 13 bis 16, bei dem die Verzeigungsleitungen (3) jeweils an einer ONU enden.

18. Verfahren zur Behebung von Signalstörungen in einem passiven optischen Netzwerk, in dem eine optische Gesamtleitung (1) in mehrere optische Verzweigungsleitungen (3) an einem Verzweigungspunkt (2) verzweigt wird, wobei beim Auftreten einer Signalstörung im Betrieb des passiven optischen Netzwerks folgende Schritte ausgeführt werden:
- Durchführen einer Detektion an einem ersten Abgriff (A0), mit der detektiert wird, ob ein in der Gesamtleitung (1) abgegriffenes und von dem Verzweigungspunkt (2) weg fließendes optisches Signal bei zeitweiser Abschaltung einer oder mehrerer Verzweigungsleitungen (3) eine digitale Signalpegelfolge aus einer Vielzahl von Signalpegeln ist, deren Pegelwerte ausschließlich einen vorbestimmten Niedrig-Pegel und einen vorbestimmten Hoch-Pegel umfassen, wobei die eine oder die mehreren zeitweise abgeschalteten Verzweigungsleitungen (3) bei der Detektion einer digitalen Signalpegelfolge permanent abgeschaltet werden, und/oder
- Durchführen einer Detektion an einer Mehrzahl von zweiten Abgriffen (A1, A2, ..., A4) , mit der detektiert wird, ob ein in einer jeweiligen Verzweigungsleitung (3) abgegriffenes und zur Gesamtleitung (1) fließendes optisches Signal eine digitale Signalpegelfolge aus einer Vielzahl von Signalpegeln ist, deren Pegelwerte ausschließlich einen vorbestimmten Niedrig-Pegel und einen vorbestimmten Hoch-Pegel umfassen, wobei im Falle, dass keine digitale Signalpegelfolge vorliegt, die jeweilige Verzweigungsleitung (3) abgeschaltet wird.

## Claims

1. Protection device for removing signal interference in a passive optical network in which a central optical cable (1) is split into several optical branching lines (3) at a branching point (2), **characterized by**:
- a first tap (A0) and/or a plurality of second taps (A1, A2, ..., A4), wherein a second tap is in each case provided in at least some of the branching lines (3) in order to tap off an optical signal flowing in the respective branching line (3) to the central cable (1), and/or wherein the first tap (A0) is provided in the central cable (1) to tap off an optical signal flowing in the central cable (1) in the direction away from the branching point (2);
- a plurality of switches (S1, S2, ..., S4), wherein a switch is in each case provided in at least some of the branching lines (3) in order to turn off the respective branching line (3);
- wherein the protection device comprises a control device (C0; C1, C2, ..., C4) which is constructed in such a manner that, when signal interference occurs in the operation of the passive optical network,
- a detection of a signal at the first tap (A0) is carried out by means of which it is detected whether the optical signal tapped off by the first tap (A0), while one or more branching lines (3) is/are temporarily turned off, is a digital signal level sequence from a multiplicity of signal levels, the level values of which comprise exclusively a predetermined Low level and a predetermined High level, wherein the switch or the switches (S1, S2, ..., S4) in the one or more branching lines (3) temporarily turned off permanently turn off the one or the several branching lines (3) when a digital signal level sequence is detected, and/or
- a detection of a signal at the second tap (A1, A2, ..., A4) is carried out by means of which it is detected whether the optical signal tapped off by the second tap (A1, A2, ..., A4) in a respective branching line (3), is a digital signal level sequence of a multiplicity of signal levels, the level values of which exclusively comprise a predetermined Low level and a predetermined High level, wherein the switch (S1, S2, ..., S4) in the respective branching line (3) turns off the respective branching line (3) in the case where there is no digital signal level sequence.

2. Device according to Claim 1, in which the control device (C0; C1, C2, ..., C4) is constructed in such a manner that when the detection of a signal at the first tap (A0) is carried out, individual branching lines and/or combinations of several branching lines are successively turned off for a predetermined period of time.

3. Device according to Claim 2, in which the predetermined period of time is 10 ms or less.

4. Device according to one of the preceding claims, in which the control device (C0; C1, C2, ..., C4) comprises in at least some of the branching lines (3) in each case a converter device (PD, K) arranged at the second tap (A1, A2, ..., A4) for converting light energy of the tapped-off optical signal into electrical voltage for controlling the switch (S1, S2, ..., S4) in the respective branching line (3), wherein the converter device (PD, K) carries out the detection of a signal at the second tap in such a manner that, in the case where the optical signal tapped off is not a digital signal level sequence, the voltage generated by the converter device (PD, K) assumes a value which causes the switch in the respective branching line (3) to be turned off.

5. Device according to Claim 4, in which the turning-off of the switch (S1, S2, ..., S4) in the respective branching line (3) is effected when the optical signal tapped off is a continuous-light signal.

6. Device according to Claim 4 or 5, in which the converter device comprises a photodiode (PD) and a capacitor (K) which interact in such a manner that the photodiode (PD), when receiving light energy from the tapped-off optical signal, charges the capacitor (K), the switch (S1, S2, ..., S4) in the respective branching line (3) being turned off by the charge of the capacitor when the charge of the capacitor (K) is adequate.

7. Device according to one of the preceding claims, in which the switches (S1, S2, ..., S4) in the branching lines (3) comprise piezoelectric switches and/or Mach-Zehnder modulators and/or electro-absorption modulators and/or switches which are switchable by optical signals.

8. Device according to Claim 7, in which at least one of the switches (S1, S2, ..., S4) which can be switched by optical signals comprises a filter (F) for passing a turn-off wavelength in the branching line (3) and an absorption dye (AD) in the branching line (3), wherein the impinging of an optical signal with the turn-off wavelength, passed by the filter (F), on the absorption dye (AD) has the effect that the absorption dye (AD) becomes opaque.

9. Device according to Claim 7 or 8, in which at least one of the switches (S1, S2, ..., S4) which can be switched by optical signals comprises a branch (A) in the branching line (3), wherein a filter for passing a turn-off wavelength (F), a photodiode (PD) and a Mach-Zehnder modulater (MZM) are arranged in the branch (A), wherein an optical signal with the turn-off wavelength, passed by the filter (F), impinges on the photodiode (PD) which thereupon generates an electrical voltage which drives the Mach-Zehnder modulator (MZM) in such a manner that the Mach-Zehnder modulator (MZM) causes the branching line (3) to be turned off.

10. Device according to one of Claims 7 to 9, wherein the switch or switches (S1, S2, ..., S4) which can be switched by optical signals can be switched by an optical signal flowing from the central cable (1).

11. Device according to one of Claims 7 to 10, in which the filter (F) in a respective switch (S1, S2, ..., S4) which can be switched by optical signals is a CWDM filter and/or a dielectric filter.

12. Device according to one of Claims 7 to 11, wherein the control device (C0; C1, ..., C4) is constructed in such a manner that it generates, and sends out into the central cable (1), the optical signals having the corresponding turn-off wavelengths.

13. Passive optical network comprising a central cable (1) which is split into several optical branching lines (3) at a branching point (2), the network comprising a device according to one of the preceding claims.

14. Network according to Claim 13, wherein the central cable (1) of the network extends from an OLT up to the branching point (2).

15. Network according to Claim 13 or 14, in which the control device is arranged at the OLT, the control device preferably being a control device of a device according to claim 12.

16. Network according to one of Claims 13 to 15, wherein the branching point (2) is formed by a cable splitter, particularly in the form of a passive optical beam divider.

17. Network according to one of Claims 13 to 16, in which the branching lines (3) in each case end at an ONU.

18. Method for removing signal interference in a passive optical network in which a central optical cable (1) is split into several optical branching lines (3) at a branching point (2), the following steps being carried out when signal interference occurs in the operation of the passive optical network:
- carrying out a detection at a first tap (A0) by means of which it is detected whether an optical signal tapped off in the central cable (1) and flowing away from the branching point (2), when one or more branching lines (3) are temporarily turned off, is a digital signal level sequence of a multiplicity of signal levels, the level values of which comprise exclusively a predetermined Low level and a predetermined High level, the one or the several temporarily disconnected branching lines (3) being permanently turned off when a digital signal level sequence is detected, and/or
- carrying out a detection at a plurality of second taps (A1, A2, ..., A4) by means of which it is detected whether an optical signal tapped off in a respective branching line (3) and flowing to the central cable (1) is a digital signal level sequence of a multiplicity of signal levels, the level values of which comprise exclusively a predetermined Low level and a predetermined High level, wherein, in the case where no digital signal level sequence is present, the respective branching line (3) is turned off.

## Revendications

1. Dispositif de protection pour supprimer les perturbations de signaux dans un réseau optique passif dans lequel une ligne optique principale (1) se ramifie en plusieurs lignes de bifurcation optiques (3) au niveau d'un point de bifurcation (2), **caractérisé par** :
- une première prise (A0) et/ou une pluralité de deuxièmes prises (A1, A2, ..., A4), dans au moins une partie des lignes de bifurcation (3) étant prévue respectivement une deuxième prise pour prélever un signal optique qui traverse la ligne de bifurcation (3) respective en direction de la ligne principale (1) et/ou la première prise (A0) étant prévue, dans la ligne principale (1), pour prélever un signal optique qui traverse la ligne principale (1) en allant s'éloignant du point de bifurcation (2) ;
- une pluralité de commutateurs (S1, S2, ..., S4), dans au moins une partie des lignes de bifurcation (3) étant respectivement prévu un commutateur pour couper la ligne de bifurcation (3) respective,
- le dispositif de protection comprenant un dispositif de commande (C0 C1, C2, ..., C4) qui est réalisé de manière telle que, lors de la survenance d'une perturbation de signal pendant le fonctionnement du réseau optique passif :
- est effectuée, au niveau de la première prise (A0), une détection d'un signal permettant de détecter si le signal optique prélevé par la première prise (A0) est, lors d'une coupure temporaire d'une ou de plusieurs lignes de bifurcation (3), une suite numérique de niveaux de signaux établie à partir d'une pluralité de niveaux de signaux dont les valeurs de niveaux comprennent exclusivement un niveau bas prédéterminé et un niveau haut prédéterminé, le ou les commutateurs (S1, S2, ..., S4), dans l'une ou les plusieurs lignes de bifurcation (3) coupées temporairement, coupant en permanence l'une ou les plusieurs lignes de bifurcation (3) à la détection d'une suite numérique de niveaux de signaux, et/ou
- est effectuée, au niveau de la deuxième prise (A1, A2, ..., A4), une détection d'un signal permettant de détecter si le signal optique prélevé par la deuxième prise (A1, A2, ..., A4) dans une ligne de bifurcation (3) respective est une suite numérique de niveaux de signaux établie à partir d'une pluralité de niveaux de signaux dont les valeurs de niveaux comprennent exclusivement un niveau bas prédéterminé et un niveau haut prédéterminé, le commutateur (S1, S2, ..., S4), dans la ligne de bifurcation (3) respective, coupant la ligne de bifurcation (3) respective en l'absence de suite numérique de niveaux de signaux.

2. Dispositif selon la revendication 1, dans lequel le dispositif de commande (C0 C1, C2, ..., C4) est réalisé de manière telle que, lors de l'exécution de la détection d'un signal au niveau de la première prise (A0), des lignes de bifurcation individuelles et/ou des combinaisons de plusieurs lignes de bifurcation sont coupées successivement pour une période de temps prédéterminée.

3. Dispositif selon la revendication 2, dans lequel la période de temps prédéterminée est de 10 ms ou moins.

4. Dispositif selon l'une des revendications précédentes, dans lequel le dispositif de commande (C0 ; C1, C2, ..., C4) comprend, dans au moins une partie des lignes de bifurcation (3), respectivement un dispositif de conversion (PD, K) situé au niveau de la deuxième prise (A1, A2, ..., A4) pour convertir de l'énergie lumineuse du signal optique prélevé en une tension électrique pour commander le commutateur (S1, S2, ..., S4) dans la ligne de bifurcation (3) respective, le dispositif de conversion (PD, K) effectuant la détection d'un signal au niveau de la deuxième prise de manière telle que, si le signal optique prélevé n'est pas une suite numérique de niveaux de signaux, la tension générée par le dispositif de conversion (PD, K) prend une valeur qui provoque la coupure du commutateur dans la ligne de bifurcation (3) respective.

5. Dispositif selon la revendication 4, dans lequel la coupure du commutateur (S1, S2, ..., S4) est provoquée, dans la ligne de bifurcation (3) respective, lorsque le signal optique prélevé est un signal lumineux continu.

6. Dispositif selon la revendication 4 ou 5, dans lequel le dispositif de conversion comprend une photodiode (PD) et un condensateur (K) qui coopèrent de manière telle que la photodiode (PD) charge le condensateur (K) à la réception d'énergie lumineuse provenant du signal optique prélevé, le commutateur (S1, S2, ..., S4), lorsque la charge du condensateur (K) est suffisante, étant coupé dans la ligne de bifurcation (3) respective par la charge du condensateur.

7. Dispositif selon l'une des revendications précédentes, dans lequel les commutateurs (S1, S2, ..., S4), dans les lignes de bifurcation (3), comprennent des commutateurs piézoélectriques et/ou des modulateurs Mach-Zehnder et/ou des modulateurs d'absorption électrique et/ou des commutateurs pouvant être commutés par des signaux optiques.

8. Dispositif selon la revendication 7, dans lequel au moins l'un des commutateurs (S1, S2, ..., S4) pouvant être commuté par des signaux optiques comprend un filtre (F) pour laisser passer une longueur d'onde de coupure dans la ligne de bifurcation (3) et un colorant d'absorption (AD) dans la ligne de bifurcation (3), l'arrivée, sur le colorant d'absorption (AD), d'un signal optique avec la longueur d'onde de coupure que le filtre (F) a laissé passer provoquant que le colorant d'absorption (AD) devient opaque.

9. Dispositif selon la revendication 7 ou 8, dans lequel au moins l'un des commutateurs (S1, S2, ..., S4) pouvant être commutés par des signaux optiques comprend une bifurcation (A) dans la ligne de bifurcation (3), un filtre pour laisser passer une longueur d'onde de coupure (F), une photodiode (PD) et un modulateur Mach-Zehnder (MZM) étant situés dans la bifurcation (A), un signal optique que le filtre (F) a laissé passer arrivant avec la longueur d'onde de coupure sur la photodiode (PD) qui génère ensuite une tension électrique qui commande le modulateur Mach-Zehnder (MZM) de manière telle que le modulateur Mach-Zehnder (MZM) provoque une coupure de la ligne de bifurcation (3).

10. Dispositif selon l'une des revendications 7 à 9, dans lequel le ou les commutateurs (S1, S2, ..., S4) pouvant être commutés par des signaux optiques peuvent être commutés par un signal optique provenant de la ligne principale (1).

11. Dispositif selon l'une des revendications 7 à 10, dans lequel le filtre (F), dans un commutateur respectif (S1, S2, ..., S4) pouvant être commuté par des signaux optiques, est un filtre CWDM et/ou un filtre diélectrique.

12. Dispositif selon l'une des revendications 7 à 11, dans lequel le dispositif de commande (C0 C1, ..., C4) est réalisé de manière telle qu'il génère les signaux optiques avec les longueurs d'onde de coupure appropriées et les envoie dans la ligne principale (1).

13. Réseau optique passif, comprenant une ligne principale (1) qui se ramifie en plusieurs lignes de bifurcation optiques (3) au niveau d'un point de bifurcation (2), le réseau comprenant un dispositif selon l'une des revendications précédentes.

14. Réseau selon la revendication 13, la ligne principale (1) du réseau s'étendant d'une OLT jusqu'au point de bifurcation (2).

15. Réseau selon la revendication 13 ou 14, dans lequel le dispositif de commande est situé sur l'OLT, le dispositif de commande étant de préférence un dispositif de commande d'un dispositif selon la revendication 12.

16. Réseau selon l'une des revendications 13 à 15, le point de bifurcation (2) étant constitué par un répartiteur de câbles, et plus particulièrement sous la forme d'un séparateur de faisceau optique passif.

17. Réseau selon l'une des revendications 13 à 16, dans lequel les lignes de bifurcation (3) se terminent respectivement au niveau d'une ONU.

18. Procédé pour supprimer les perturbations de signaux dans un réseau optique passif dans lequel une ligne optique principale (1) se ramifie en plusieurs lignes de bifurcation optiques (3) au niveau d'un point de bifurcation (2), les étapes suivantes étant exécutées lors de la survenance d'une perturbation de signal pendant le fonctionnement du réseau optique passif :
- exécution d'une détection au niveau d'une première prise (A0), permettant de détecter si un signal optique prélevé dans la ligne principale (1) et allant s'éloignant du point de bifurcation (2) est, lors d'une coupure temporaire d'une ou de plusieurs lignes de bifurcation (3), une suite numérique de niveaux de signaux établie à partir d'une pluralité de niveaux de signaux dont les valeurs de niveaux comprennent exclusivement un niveau bas prédéterminé et un niveau haut prédéterminé, l'une ou les plusieurs lignes de bifurcation (3) coupées temporairement étant coupées en permanence à la détection d'une suite numérique de niveaux de signaux, et/ou
- exécution d'une détection au niveau d'une pluralité de deuxièmes prises (A1, A2, ..., A4), permettant de détecter si un signal optique prélevé dans une ligne de bifurcation (3) respective et allant vers la ligne principale (1) est une suite numérique de niveaux de signaux établie à partir d'une pluralité de niveaux de signaux dont les valeurs de niveaux comprennent exclusivement un niveau bas prédéterminé et un niveau haut prédéterminé, la ligne de bifurcation (3) respective étant coupée en l'absence de suite numérique de niveaux de signaux.
